# EUROPEAN PATENT SPECIFICATION

(11) **EP 1 914 917 B1**
(45) Date of publication and mention of the grant of the patent: **17.09.2014**
(21) Application number: 06761565.8
(22) Date of filing: 25.07.2006
(51) Int. Cl.: H04L 5/00

(54) **A SIGNAL MODULATION METHOD BASED ON ORTHOGONAL FREQUENCY DIVISION MULTIPLE AND THE APPARATUS THEREOF**
SIGNALMODULATIONSVERFAHREN AUF DER BASIS VON ORTHOGONAL-FREQUENZVIELFACH UND VORRICHTUNG DAFÜR
PROCEDE DE MODULATION DE SIGNAUX D'APRES MULTIPLEXAGE PAR REPARTITION ORTHOGONALE DE LA FREQUENCE ET APPAREIL ASSOCIE

(30) Priority: 08.08.2005 CN 200510089837
(43) Date of publication of application: 23.04.2008
(73) Proprietor: Huawei Technologies Co., Ltd., Longgang District, Shenzhen Guangdong 518129 (CN)
(72) Inventor: YANG, Xuezhi, Shenzhen, Guangdong 518129 (CN)
(74) Representative: Körber, Martin Hans
(86) International application number: PCT/CN2006/001835
(87) International publication number: WO 2007/016854

(56) References cited:
- EP-A- 1 538 802
- EP-A1- 1 001 566
- EP-A2- 1 538 802
- WO-A-01/71928
- CN-A- 1 221 270
- JP-A- 2001 024 617
- US-A1- 2003 123 383
- US-A1- 2003 223 354
- HASSAN YAGHOOBI: "Scalable OFDMA Physical Layer in IEEE 802.16 Wireless MAN" INTEL TECHNOLOGY JOURNAL, XX, US, vol. 8, no. 3, 20 August 2004 (2004-08-20), pages 1-14, XP002407819
- JAEKYOUNG MOON ET AL: "Adaptive OFDM system for multi-rate multi-user services in wireless communications" WIRELESS PERSONAL MULTIMEDIA COMMUNICATIONS, 2002. THE 5TH INTERNATION AL SYMPOSIUM ON OCT. 27-30, 2002, PISCATAWAY, NJ, USA,IEEE, vol. 3, 27 October 2002 (2002-10-27), pages 1039-1043, XP010619250 ISBN: 978-0-7803-7442-3
- INSEOK HWANG ET AL: "A New Frame Structure for Scalable OFDMA Systems, IEEE C802.16d-04/19" CONTRIBUTED DOCUMENTS FROM IEEE 802.16 TASK GROUP D,, 11 March 2004 (2004-03-11), XP002498776
- CHINAMOBILE ET AL: "Proposal for the reduced set of DL transmission parameters", 3GPP DRAFT; R1-050824, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. London, UK; 20050825, 25 August 2005 (2005-08-25), XP050100454, [retrieved on 2005-08-25]

## Description

### Field of the Invention

The disclosure relates to the technical field of orthogonal frequency division multiplex (OFDM) technology, and in particular to a signal modulation method based on OFDM and a modulation device thereof.

### Background of the Invention

The next generation mobile communication technologies need to support various service types such as voice, data, audio, video and image. In order to support various services, it is required that a next generation mobile communication system can support higher data transmission rate and higher spectrum efficiency, provide a perfect quality of service (QoS) guarantee mechanism as well as provide a better mobility support and seamless coverage of network, so as to achieve the object of providing communication service for users anywhere and at any time. In the 2^{nd} mobile communications, TDMA (GSM) and narrowband CDMA (IS-95) are main access technologies, and in the 3^{rd} mobile communications, broadband CDMA (UMTS, WCDMA) is a main access technology. In the CDMA technology, a user data symbol occupies all the carrier bandwidth, and different users or user data are distinguished from each other via different spreading codes. Because the orthogonality of the spreading codes is destroyed by multi-path channels, the system in the CDMA technology becomes a self-interference system. Therefore, the capacity and spectrum efficiency of the CDMA system cannot satisfy the requirements by the future broadband wireless communications.

Since the 1990's, multi-carrier technology has become a hotspot of the broadband wireless communications. The fundamental idea of this technology is dividing a broadband carrier into a plurality of sub-carriers, and transmitting data on the sub-carriers in parallel. In a majority of system applications, the bandwidth of a sub-carrier is smaller than the coherent bandwidth of the channel, so the fading on each sub-carrier is a flat fading on a frequency selective channel. Therefore, the interference between the user data symbols is reduced, and no complicated channel equalization is required, which is suitable for the high rate data transmission. At present, there exist a plurality of multi-carrier technologies, such as orthogonal frequency division multiplex access (OFDMA) and multiplex carrier CDMA (MC-CDMA).

The orthogonal frequency division multiplex (OFDM) was first put forward in the middle of 1960's. However, in quite a long period of time thereafter, no large scale application with the OFDM technology could be realized. At that time, many problems blocked the development of the OFDM technology.

First, it is required in the OFDM technology that the sub-carriers should be orthogonal to each other. Although it was found theoretically that this orthogonal modulation may be realized perfectly with the Fast Fourier Transformation (FFT), the implementation of the FFT is so complicated that it could not be realized at that time.

Furthermore, factors such as the stability of the oscillators in the transmitter and receiver as well as the linearity of the radio power amplifier were all restrictions on the implementation of the OFDM technology.

Since the 1980's, the problem of implementation of the FFT has been resolved with the development of the large scale integrated circuit. With the development of the DSP chip technology, the OFDM technology has evolved from the theory to the practical application. Due to advantages of the inherent relatively strong resistance to the time delay spread and relatively high spectrum efficiency, the OFDM technology becomes rapidly a focus of the research and is adopted by a plurality of international specifications, such as Digital Audio Broadcasting (DAB) standard, Digital Video Broadcasting (DVB) standard, HIPERLAN and Wireless Local Area Network (WLAN) standard of IEEE 802.11 as well as Wireless Metropolitan Area Network (WMAN) standard of IEEE 802.16.

In the 3GPP RAN meeting #26 held in November, 2004, project Long Term Evolution (LTE) of UMTS is initiated by a plurality of operators and device vendors jointly, and the multi-carrier technology is an access technology mainly involved in the discussion. In the 3GPP LTE, as a mainstream multiple access solution, the downlink OFDMA, uplink DFT-spread-OFDM, SC-FDMA and IFDMA are involved in the discussion.

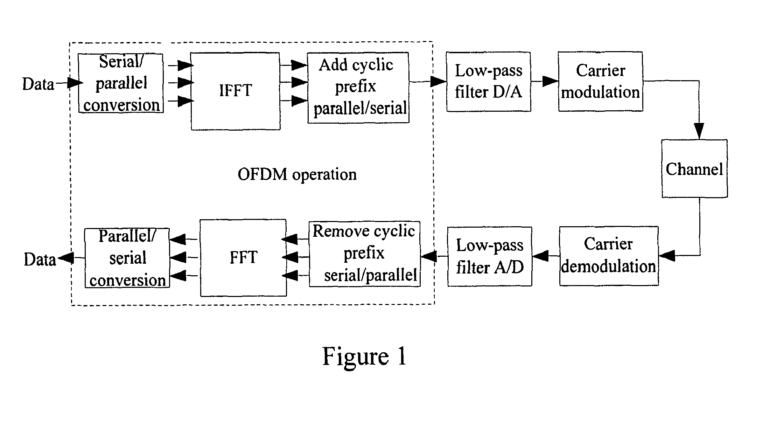

The OFDMA technology is a representative technology in the multi-carrier technologies. As shown in Figure 1, user data is first subject to channel encoding and interleaving processing, then modulated with a modulation mode (such as BPSK, QPSK and QAM) to obtain a user data symbol, and modulated to radio frequency through the operation of the OFDM system. In the operation of the OFDM system, the user data symbol is first serial/parallel converted, so as to form a plurality of low-rate sub data streams, each sub data stream occupying a sub-carrier. The mapping from the sub data stream to the sub-carrier may be realized via an Inverse Discrete Fourier Transformation (IDFT) or Inverse Fast Fourier Transformation (IFFT). Meanwhile, a Cyclic Prefix (CP) is used as guard interval between the sub data streams, so that the inter-symbol interference may be greatly reduced or even eliminated. Furthermore, the orthogonality between the channels may be guaranteed, so that the inter-channel interference may be greatly reduced.

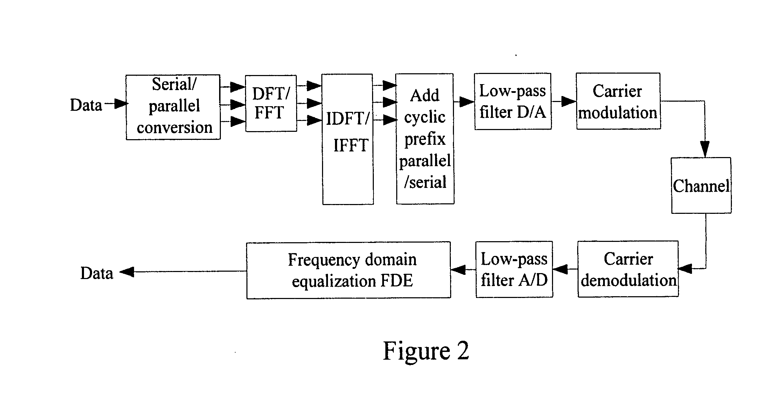

However, in the practical application of the OFDMA technology, there exists a problem of high Peak-to-Average Ratio (PAR). The high PAR decreases the efficiency of the power amplifier and the coverage area of the network. Especially for an uplink application, because the transmission power of the terminal is relatively small, the problem of high PAR is particularly disadvantageous for the communication system. Therefore, it is further put forward in the 3GPP LTE that the DFT-S-OFDM technology, which has a relatively low PAR, may be employed as an alternative technology of the multi-carrier solution in uplink. The block diagram of the working principle of the DFT-S-OFDM technology is as shown in Figure 2.

In the 3GPP LTE, the function of supporting scalable bandwidth is taken as a requirement, i.e., a communication system should support different bandwidth requirements such as 1.25MHz, 2.5MHz, 5MHz, 10MHz, 15MHz and 20MHz. In order to support scalable bandwidth, a parameter set is configured for each supported bandwidth in the 3GPP TR 25.814 specification. The parameter set includes sampling frequency and FFT size, so as to support different transmission bandwidths. The parameter set corresponding to each transmission bandwidth is as shown in Table 1:

**Table 1:**

| Transmission BW | 1.25 MHz | 2.5 MHz | 5 MHz | 10 MHz | 15 MHz | 20 MHz |
|---|---|---|---|---|---|---|
| Sub-frame duration | 0.5 ms | | | | | |
| Sub-carrier spacing | 15 kHz | | | | | |
| Chip Rate/ Sampling frequency | 1.92 MHz (1/2 × 3.84 MHz) | 3.84 MHz | 7.68 MHz (2 × 3.84 MHz) | 15.36 MHz (4 × 3.84 MHz) | 23.04 MHz (6 × 3.84 MHz) | 30.72 MHz (8 × 3.84 MHz) |
| FFT size | 128 | 256 | 512 | 1024 | 1536 | 2048 |
| Number of effective sub-carriers | 76 | 151 | 301 | 601 | 901 | 1201 |

It can be seen that in this table of the parameter set, considering the support of mobility by the OFDM system and the compromise of the coherent bandwidth, 15kHz is adopted as sub-carrier spacing for different transmission bandwidths. In systems with different transmission bandwidths, the sub-carrier spacing is maintained constant while the corresponding sampling frequency and the FFT size is changed.

However, when the supporting of different transmission bandwidths is realized by maintaining the above parameter set in the OFDM technology, there are following disadvantages:
1. It is desired to adopt 2-based algorithm when implementing FFT computation, because the 2-based FFT involves relatively low operation and can be conveniently implemented. However, it can be seen from above table that with respect to the transmission bandwidth of 15MHz, the 2-based FFT algorithm could not be employed which increases the computation complexity.
2. If a terminal and a base station only support a sampling frequency and an FFT size in the above table respectively, the communication between the terminal and the base station can be implemented only when the communication is based on the same transmission bandwidth.
3. At present, in order to support the communication between the terminal and the base station based on different transmission bandwidths, it is required that the terminal and the base station are able to support the six sampling frequencies and FFT sizes in the above table respectively, i.e., the terminal and the base station should be able to support a plurality of parameter sets in the above table at the same time. Thus, the cost of the terminal and the base station will definitely be increased.

U.S. Patent Application "OFDM Multiple Sub-channel Communication System", Publication No. US 2003/0123383 A1, discloses a transmitter and corresponding method for transmitting an OFDM signal in a communications channel, including a plurality of base-band OFDM modulators, each for modulating a respective data signal onto a plurality of orthogonal sub-carriers and outputting a respective sub-channel OFDM signal.

### Summary of the Invention

The technical problem to be resolved by the present disclosure is to provide a signal modulation method based on OFDM and a modulation device thereof, so that the terminal and the base station can perform communication base on different transmission bandwidths even if the terminal and the base station only support a set of parameters.

To resolve the above problems, the invention provides a signal modulation method based on orthogonal frequency division multiplex, according to claim 1.

Preferably, in the process of determining the baseband frequency range according to the baseband sampling frequency, a maximum range of the baseband frequency range is determined according to the baseband sampling frequency.

Preferably, in the process of determining N frequency range subsets within the baseband frequency range, each determined frequency range subset is non-overlapping.

Preferably, in the process of determining N frequency range subsets within the baseband frequency range, when determining each to-be-determined frequency range subset, it is guaranteed that a specified frequency range interval is reserved between every two neighboring to-be-determined frequency range subsets.

Preferably, each to-be-determined frequency range subset is formed by excluding a guard band from a system carrier bandwidth.

Preferably, in the process of selecting n frequency range subsets from the N determined frequency range subsets, and generating the baseband signal whose frequency range is restricted to the n selected frequency range subsets, an Inverse Fast Fourier Transformation is used to generate the baseband signal.

Preferably, in the process of selecting n frequency range subsets from the N determined frequency range subsets, and generating the baseband signal whose frequency range is restricted to the n selected frequency range subsets, the baseband signal whose frequency range is restricted to the n selected frequency range subsets is generated by setting a power of the sub-carrier corresponding to the frequency range outside the n selected frequency range subsets to zero.

Preferably, the process of determining N frequency range subsets within the baseband frequency range further comprises: modifying a frequency range of the determined frequency range subset.

Preferably, if N≥2, the process of determining N frequency range subsets within the baseband frequency range further comprises:
selecting m frequency range subsets from the N determined frequency range subsets, and
combining the m selected frequency range subsets into a frequency range subset.

Preferably, in the process of selecting m frequency range subsets from the N determined frequency range subsets, the m selected frequency range subsets are continuous.

Preferably, the frequency range of the combined frequency range subset obtained through combination in the process of combining the m selected frequency range subsets into the frequency range subset comprises:
frequency ranges corresponding to the m selected frequency range subsets respectively; and
frequency range intervals between every two neighboring frequency range subsets in the m selected continuous frequency range subsets.

Preferably, the method is used in:
an Orthogonal Frequency Division Multiplex Access system; or
a Discrete Fourier Transformation Spread Orthogonal Frequency Division Multiplex Access system; or
a Multiplex Carrier Code Division Multiple Access system.

Correspondingly, the present invention further provides a signal modulation device based on orthogonal frequency division multiplex, according to claim 13.

Preferably, the signal modulation device further comprises:
a selecting unit, adapted to select m frequency range subsets from the N determined frequency range subsets; and
a combining unit, adapted to combine the m selected frequency range subsets into a frequency range subset.

Preferably, the baseband signal generating unit specifically comprises:

a selecting sub-unit, adapted to select n frequency range subsets from the N determined frequency range subsets;
a zero setting sub-unit, adapted to set a power of a sub-carrier corresponding to a frequency range outside the n selected frequency range subsets to zero; and
a baseband signal generating sub-unit, adapted to generate a baseband signal whose frequency range is restricted to the n selected frequency range subsets.

Preferably, the baseband signal generating unit adopts Inverse Fast Fourier Transformation to generate the baseband signal.

N frequency range subsets are determined with the baseband frequency range determined by the baseband chip rate, n frequency range subsets (1 ≤n≤N) are selected from the N frequency range subsets, and a baseband signal whose frequency range is restricted to the n frequency range subsets is generated; and then the baseband signal generated is modulated onto a carrier, so that the following advantages may be obtained:
1) A plurality of transmission bandwidths may be supported with a set of transmission parameters, so that the investment of development of base station and terminal device may be reduced;
2) The non 2-based FFT operation between the existing different transmission bandwidths may be avoided, so that the complexity of implementing different transmission bandwidths may be reduced;
3) The inter-working at the physical layer between the transmitter and receiver based on different transmission bandwidths may be realized, and the forward and backward compatibility of the physical layer of the wireless communication system may be further realized, so that a smooth and seamless evolution of the wireless communication system may be

### Brief Description of the Drawings

Figure 1 is a block diagram showing the working principle of OFDM in the prior art;
Figure 2 is a block diagram showing the working principle of the DFT-S-OFDM in the prior art;
Figure 3 is a flow chart of the main implementing principle of a signal modulation method based on OFDM according to the disclosure;
Figure 4 is a schematic diagram showing an embodiment of supporting two transmission bandwidths with a set of parameters based on the method provided by the disclosure;
Figure 5 is a schematic diagram showing the main structure of a signal modulation device based on OFDM according to the disclosure;
Figure 6 is a schematic diagram showing the structure of the signal modulation device with an additional frequency range subset combination function according to an embodiment of the disclosure; and
Figure 7 is a schematic diagram showing the specific structure of a baseband signal generating unit in the device provided by the disclosure.

### Detailed Description of the Embodiments

With respect to the defect that only one transmission bandwidth can be supported with a set of parameters (including a sampling frequency and an FFT size) in the existing OFDM technology, the present disclosure provides a technical solution in which an scalable bandwidth may be realized in the wireless communication system, so that a communication may be implemented based on different transmission bandwidths even if a terminal and a network only supports a set of parameters respectively. Meanwhile, forward compatibility and backward compatibility may be realized in the multiple access technology of the wireless communication system.

Hereinafter, the implementing principle and specific embodiments of a signal modulation method based on OFDM and a modulation device thereof according to the disclosure will be described in detail in conjunction with the drawings.

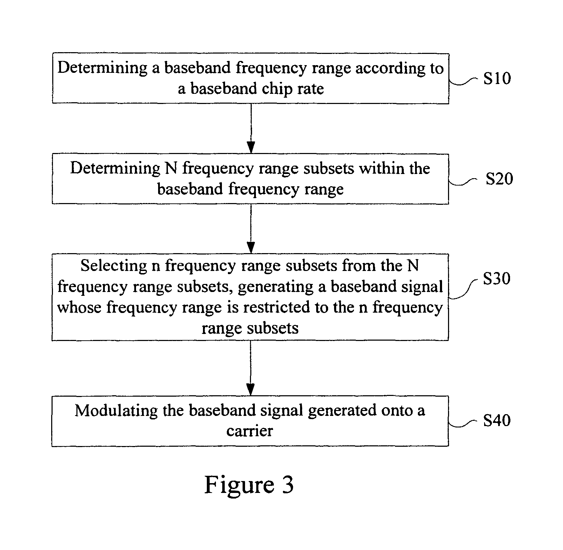

Please refer to Figure 3, which is a flow chart of the main implementing principle of a signal modulation method based on OFDM according to the disclosure. The main implementing process is as follows:

S 10, a chip rate f_{chip} of a baseband signal is selected firstly, a corresponding baseband frequency range is determined according to the baseband chip rate f_{chip} selected. Preferably, a corresponding maximum range [-f_{chip}/2, f_{chip}/2] of the baseband frequency is determined according to the baseband chip rate f_{chip} selected.

S20, N frequency range subsets are determined in the baseband frequency range that is determined above, where N is a natural number. Each frequency range subset determined corresponds to an equivalent carrier frequency and a transmission bandwidth. It can be hypothesized here that the frequency range of each frequency range subset is [f₋, f₊].

According to specific requirements, the frequency range of each frequency range subset determined here may be modified subsequently. In other words, the frequency range of each frequency range subset [f₋, f₊] may be modified to achieve the object of modifying the transmission bandwidth corresponding to each frequency range subset.

Preferably, during the process of determining the frequency range subset, it should be ensured that the frequency range of each frequency range subset determined is non-overlapping. Meanwhile, it should be ensured that a specified frequency range interval is reserved between every two neighboring frequency range subsets, which acts as a guard interval between the two neighboring frequency range subsets.

Meanwhile, m frequency range subsets (2≤m≤N) may be selected from the N frequency range subsets (N > 1) that are determined, and the m frequency range subsets selected may be combined to a new frequency range subset. Preferably, the m frequency range subsets selected are continuous, so that the frequency range of the new frequency range subset obtained through combination may include the frequency ranges corresponding to the m frequency range subsets selected respectively as well as the frequency range intervals between every two neighboring frequency range subsets in the m continuous frequency range subsets.

S30, n frequency range subsets are selected from the N frequency range subsets determined above, where 1 ≤n≤N, and a baseband signal whose frequency range is restricted to the n frequency range subsets selected is generated. The process of restricting the frequency range of the baseband signal generated to the n frequency range subsets selected may be as follows:

The transmission power of an OFDM sub-carrier corresponding to a frequency range outside the n frequency range subsets selected is set to zero with an OFDM/IFFT operation. In other words, the numerical vale corresponding to the frequency range outside the n frequency range subsets selected is set to zero in an input sequence of IFFT.

S40, the baseband signal generated above is modulated onto a carrier. If the carrier frequency is f_{c}, the equivalent central carrier frequency corresponding to each frequency range subset that is f_{c}+(f₊+f₋)/2. It can be seen that the equivalent central carrier frequency may be modified by changing the central position of the frequency range subset of the baseband signal.

In the above S10, a baseband chip rate of 7.68MHz may be selected. In S20, three frequency range subsets whose widths are 1.25MHz, 2.5MHz and 5MHz respectively may be obtained from the maximum range of the baseband frequency determined by the baseband chip rate of 7.68MHz, so that based on the chip rate of 7.68MHz, three different transmission bandwidths, i.e. 1.25MHz, 2.5MHz and 5MHz, may be supported. Furthermore, a baseband chip rate of 30.72MHz may be selected. In S20, three frequency range subsets whose widths are 10MHz, 15MHz and 20MHz respectively may be obtained from the maximum range of the baseband frequency determined by the baseband chip rate of 7.68MHz, so that based on the chip rate of 30.72MHz, three different transmission bandwidths, i.e. 10MHz, 15MHz and 20MHz, may be supported.

In a TDMA system or CDMA system, the transmission bandwidth of the baseband signal is invariable, because the transmission bandwidth of the baseband signal is determined by the chip rate. However, in an OFDM system, the actual transmission bandwidth of the baseband signal may be controlled via sub-carrier in the same chip rate / sampling frequency.

For example, for an OFDM system whose chip rate is f_{chip}, the maximum range of the baseband frequency is [-f_{chip}/2, f_{chip}/2].

If the maximum range of the baseband frequency is modulated to the radio frequency via a frequency whose carrier central frequency is f_{c}, the corresponding radio frequency transmission bandwidth is [f_{c}-f_{chip}/2, f_{c}+f_{chip}/2].

Therefore, when it is required, some sub-carriers of the baseband signal may be set to zero, and the frequency range of the actual baseband signal is restricted to [f₋, f₊] ⊆ [-f_{chip}/2, f_{chip}/2], which may not be central symmetrical relative to DC. After that, the frequency range of the baseband signal [f₋, f₊] is modulated onto the carrier frequency f_{c}, so the radio frequency transmission bandwidth is [f_{c}+f₋, f_{c}+f₊] = [f_{c}+(f₊+f₋)/2-(f₊-f₋)/2, f_{c}+(f₊+f₋)/2+(f₊-f₋)/2]. In other words, it is equivalent that the transmission bandwidth of the baseband signal is [-(f₊-f₋)/2, (f₊-f₋)/2], and the carrier central frequency becomes f_{c}+(f₊+f₋)/2. Thus, the object of changing the transmission bandwidth and the carrier central frequency by controlling the frequency range at the baseband signal is achieved.

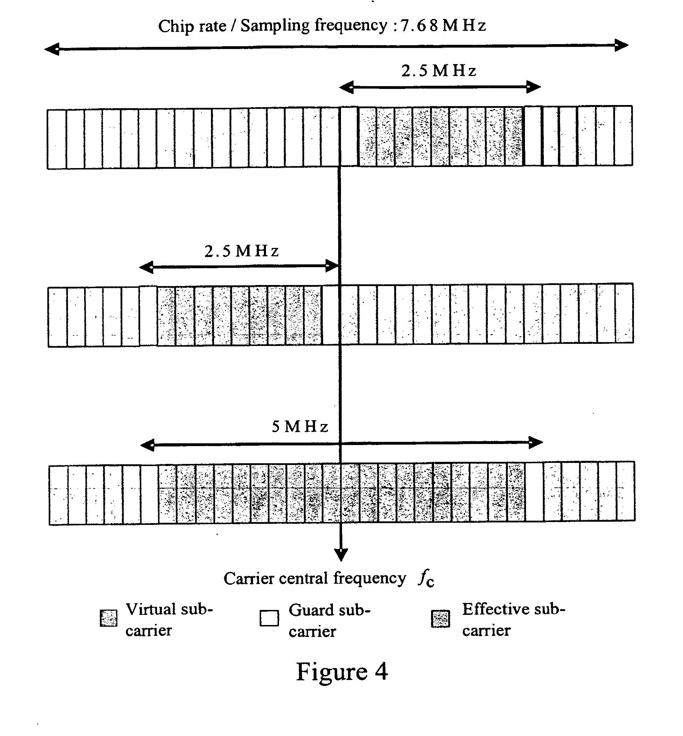

Figure 4 is a schematic diagram showing an embodiment of supporting two transmission bandwidths with a set of parameters based on the method provided by the disclosure. In Figure 4, the principle of supporting two different transmission bandwidths with a set of parameters (the chip rate / sampling frequency are both 7.68MHz) is illustrated. Furthermore, three or more than three different transmission bandwidths may be supported with a set of parameters by analogy. As shown in Figure 4, three sub-carriers are defined here according to the disclosure:

1. Virtual sub-carrier, refers to the sub-carrier outside the specified transmission bandwidth. Because the chip rate may be higher than the transmission bandwidth, the frequency of some sub-carriers may be outside the transmission bandwidth. These sub-carriers may become the virtual sub-carrier defined here by setting the transmission power of these sub-carriers to zero.

2. Guard sub-carrier, refers to the sub-carrier within the specified transmission bandwidth. The transmission power of these sub-carriers is set to zero to act as guard band, so that the spectrum emission mask may be satisfied. The width of the guard sub-carrier may be flexibly configured according to the requirements on the performance of the filter, so that the transmission bandwidth may be utilized to the maximum extent while satisfying the requirements of the spectrum emission mask.

3. Effective sub-carrier, refers to the sub-carrier that actually carries a signaling or data.

It can be seen that with a chip rate / sampling frequency of 7.68MHz, a transmission bandwidth of 5MHz may be supported, or two transmission bandwidths of 2.5MHz may be supported, through the configuration of the virtual sub-carrier and the guard sub-carrier shown in Figure 4. Accordingly, four transmission bandwidths of 1.25MHz or three transmission bandwidths of 1.6MHz may be supported by analogy.

Based on the above principle, the parameter set corresponding to different transmission bandwidths in the 3GPP LTE system may be modified as shown in the following Table 2:

**Table 2:**

| Transmission BW | 1.25 MHz | 2.5 MHz | 5 MHz | 10 MHz | 15 MHz | 20 MHz |
|---|---|---|---|---|---|---|
| Sub-frame duration | 0.5 ms | | | | | |
| Sub-carrier spacing | 15 kHz | | | | | |
| Chip Rate/ Sampling frequency | 7.68 MHz (2×3.84 MHz) | | | 30.72 MHz (8×3.84 MHz) | | |
| FFT size | 512 | | | 2048 | | |
| Number of sub-carriers within BW | 83 | 166 | 333 | 666 | 1000 | 1333 |
| Number of Guard sub-carriers | 7 | 15 | 32 | 65 | 99 | 132 |
| Number of effective sub-carriers | 76 | 151 | 301 | 601 | 901 | 1201 |

It can be seen from the above Table 2 that the highest chip rate / sampling frequency and longest FFT size may be used for supporting the six transmission bandwidths between 1.25MHz and 20MHz. Considering the development stage of the devices, two parameter sets (without limitation) may be selected corresponding to different transmission bandwidths, i.e., chip rate of 7.68MHz / FFT size of 512 is used for supporting transmission bandwidths of 1.25MHz, 2.5MHz and 5MHz, and chip rate of 30.72MHz / FFT size of 2048 is used for supporting transmission bandwidths of 10MHz, 15MHz and 20MHz.

The method according to the disclosure may be used in but not limited to the following wireless communication systems:
Orthogonal Frequency Division Multiplex Access (OFDMA) system, Discrete Fourier Transformation Spread Orthogonal Frequency Division Multiplex Access (DFT-S-OFDMAO) system, or Multiple Carrier CDMA (MC-CDMA) system.

The requirements on the protocol design of a wireless communication system should satisfy two design constraints. One is that the design should satisfy the requirements raised during the development of society, and the other is that the design is restricted by the state of the art. With the development of the communication technology, the communication system is required to have higher data transmission rate, higher mobility and broader signal coverage area. On the other hand, due to the constraints of the state of the art and investment cost, it is not possible that the technical criteria of a wireless communication system exceed the state of the art greatly. Instead, it is only possible to establish a corresponding communication protocol according to the technical criteria achievable at that time. Going through the development of the 1^{st} Generation, 2^{nd} Generation and 3^{rd} Generation, the mobile communication technology evolves now to a very high level. The communication network becomes increasingly large, and an operator generally invests tens of billion dollars in a communication network. Meanwhile, there exist generally an even larger number of user terminals. Therefore, during the upgrade from an existing wireless network to a new wireless network, if the backward compatibility can be realized, i.e., the new network system is able to support the original terminal devices, the enormous investment of the operator in the existing wireless network system may be protected. Meanwhile, if the forward compatibility can be realized, i.e., the old network system is able to support the new terminal devices, a smooth and seamless upgrade of the existing network system may be achieved, and the operator may start operation without the necessity of completely building a huge new network system of full coverage. Thus, the investment risk of the operator is effectively reduced.

The backward compatibility and forward compatibility of the physical layer of the wireless communication system may both be realized in the solution provided by the disclosure. Hereinafter, it will be illustrated how the bidirectional compatibility is realized in the solution provided by the disclosure.

In order to illustrate that the bidirectional compatibility of the physical layer of the wireless communication system may be realized when adopting the solution provided by the disclosure, it is hypothesized that the basic parameter set for transmission of the original wireless communication system is as shown in the following table:

**Table 3:**

| Transmission BW | 2.5 MHz |
|---|---|
| Sub-frame duration | 0.5 ms |
| Sub-carrier spacing | 15 kHz |
| Chip Rate/ Sampling frequency | 7.68 MHz (2×3.84 MHz) |
| FFT size | 512 |
| Number of sub-carriers within BW | 166 |
| Number of Guard sub-carriers | 15 |
| Number of effective sub-carriers | 151 |

Based on Table 3, in the following Scene I:
The new wireless communication system is upgraded to have a transmission bandwidth of 5MHz, so a higher peak rate may be supported. Then the parameter set for transmission of the new wireless communication system is as shown in Table 4:

**Table 4:**

| Transmission BW | 2.5 MHz | 5 MHz |
|---|---|---|
| Sub-frame duration | 0.5 ms | |
| Sub-carrier spacing | 15 kHz | |
| Chip Rate/ Sampling frequency | 7.68 MHz (2 × 3.84 MHz) | |
| FFT size | 512 | |
| Number of sub-carriers within BW | 166 | 333 |
| Number of Guard sub-carriers | 15 | 32 |
| Number of effective sub-carriers | 151 | 301 |

It can be seen in Scene I that with the solution provided by the disclosure, the baseband signal of the wireless communication network and terminal device whose original transmission bandwidth is 2.5MHz has the capability of supporting the transmission bandwidth of 5MHz (because the chip rate / sampling frequency is 7.68MHz, and FFT size is 512). Therefore, when the existing wireless communication network is upgraded, it is not necessary to made any hardware modification and parameter modification from the baseband to the radio frequency of the original wireless communication network and terminal devices, and even not necessary to modify the software. It is only required to make a certain parameter modification on the resource allocation of the network, so as to realize the forward compatibility and backward compatibility.

Based on Table 3, in the following Scene II:
If the existing wireless communication network with the transmission bandwidth of 5MHz is further upgraded to the network with the transmission bandwidth of 10MHz, because the transmission bandwidth of 10MHz cannot be supported with the original chip rate / sampling frequency of 7.68MHz and FFT size of 512 in the solution provided by the disclosure, the transmission parameters of the upgraded wireless communication network should be modified to have a chip rate or sampling frequency of 30.72MHz / FFT size of 2048. The modified parameter set for transmission is as shown in the following Table 5:

**Table 5:**

| Transmission BW | 5 MHz | 10 MHz |
|---|---|---|
| Sub-frame duration | 0.5 ms | |
| Sub-carrier spacing | 15 kHz | |
| Chip Rate/ Sampling frequency | 7.68 MHz (2 × 3.84 MHz) | 30.72 MHz (8 × 3.84 MHz) |
| FFT size | 512 | 2048 |
| Number of sub-carriers within BW | 333 | 666 |
| Number of Guard sub-carriers | 32 | 65 |
| Number of effective sub-carriers | 301 | 601 |

Based on the above, the principle of supporting the backward compatibility, i.e. the new network system supports the old terminal devices, will be firstly illustrated hereinafter.

A1, Transmission performed by base station and reception performed by terminal: The resource allocation at the base station side is performed within the original transmission bandwidth of 5MHz of the network system, and the new chip rate and FFT size are adopted. The baseband signal is the same as the analog signal of the original network system after D/A conversion. Therefore, the terminal can perform normal reception without the necessity of making any modification.

A2, Transmission performed by terminal and reception performed by base station: The chip rate of 7.68MHz and FFT size of 512 are adopted in the baseband transmission parameter of the terminal, and the chip rate of 30.72MHz and FFT size of 2048 are adopted in the baseband transmission parameter when the base station performs reception. Because the transmission signal of the original terminal is a part of the new network system, the base station can receive the transmission signal of the original terminal correctly.

Furthermore, the principle of supporting the forward compatibility, i.e. the old network system supports the new terminal devices, will be illustrated hereinafter.

B1: Transmission performed by base station and reception performed by terminal: The chip rate of 7.68MHz and FFT size of 512 are adopted in the baseband transmission parameter of the base station, and the chip rate of 30.72MHz and FFT size of 2048 are adopted in the baseband transmission parameter when the terminal performs reception. Because the transmission signal of the original base station is a part of the capability of the new terminal, the terminal can receive the transmission signal of the original base station correctly.

B2: Transmission performed by terminal and reception performed by base station: The bandwidth resources allocated to the terminal by the system is restricted to 5MHz of the original network system, and only a subset of the capability of the new terminal is used. In other words, when the terminal adopts the new chip rate and FFT size for baseband signal processing, the baseband signal is the same as the analog signal of the original communication system after D/A conversion. Therefore, the base station can perform reception correctly without the necessity of making any modification.

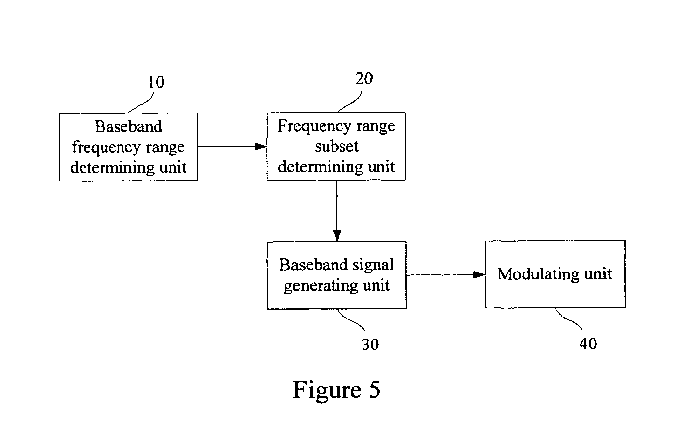

Correspondingly, the disclosure further provides a signal modulation device based on OFDM. Please refer to Figure 5, which is a schematic diagram showing the main structure of the signal modulation device based on OFDM according to the disclosure. The signal modulation device mainly includes a baseband frequency range determining unit 10, a frequency range subset determining unit 20, a baseband signal generating unit 30 and a modulating unit 40. The function of each part and the connection between them are as follows:
The baseband frequency range determining unit 10 is adapted to determine the baseband frequency range according to the baseband chip rate;
The frequency range subset determining unit 20 is logically connected with the baseband frequency range determining unit 10, and is adapted to determine N frequency range subsets within the baseband frequency range determined by the baseband frequency range determining unit 10, where N is a natural number;
The baseband signal generating unit 30 is logically connected with the frequency range subset determining unit 20, and is adapted to select n frequency range subsets from the N frequency range subsets determined by the frequency range subset determining unit 20 and generate a baseband signal whose frequency range is restricted to the n frequency range subsets, where 1≤n≤N;
The modulating unit 40 is logically connected with the baseband signal generating unit 30, and is adapted to modulate the baseband signal generated by the baseband signal generating unit 30 onto a carrier.

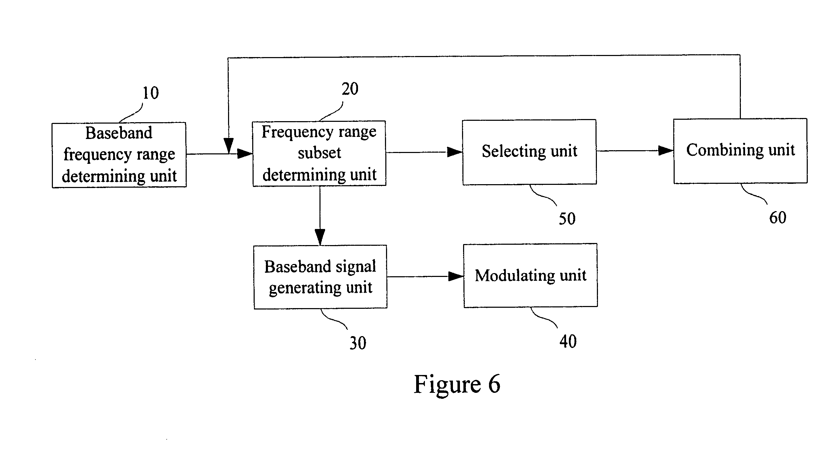

Please refer to Figure 6, which is a schematic diagram showing the structure of a signal modulation device with an additional frequency range subset combination function according to an embodiment of the disclosure. Based on the structure shown in Figure 5, the device further includes a selecting unit 50 and a combining unit 60. The specific functions of these two units are as follows:
The selecting unit 50 is logically connected with the frequency range subset determining unit 20, and is adapted to select m frequency range subsets from the N frequency range subsets determined by the frequency range subset determining unit 20, where 2≤m≤N;
The combining unit 60 is logically connected with the selecting unit 50, and is adapted to combine the m frequency range subsets selected by the selecting unit 50 into a new frequency range subset.

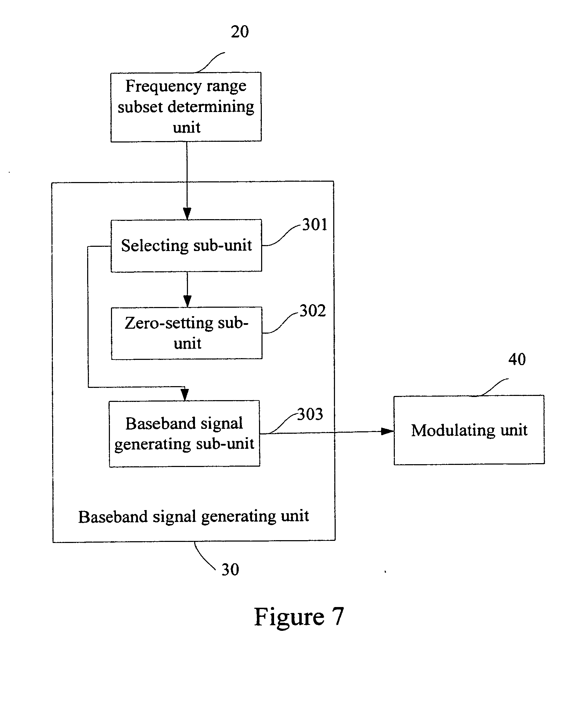

Please refer to Figure 7, which is a schematic diagram showing the specific structure of a baseband signal generating unit in the device provided by the disclosure. The baseband signal generating unit 30 mainly includes a selecting sub-unit 301, a zero setting sub-unit 302 and a baseband signal generating sub-unit 303. The function of each sub-unit and the connection relation between them is as follows:
The selecting sub-unit 301 is logically connected with the frequency range subset determining unit 20, and is adapted to select n frequency range subsets from the N frequency range subsets determined by the frequency range subset determining unit 20;
The zero setting sub-unit 302 is logically connected with the selecting sub-unit 301, and is adapted to set the transmission power of the sub-carriers corresponding to the frequency range outside the n frequency range subsets selected by the selecting sub-unit 301 to zero;
The baseband signal generating sub-unit 303 is logically connected with the selecting sub-unit 301, and is adapted to generate a baseband signal whose frequency range is restricted to the n frequency range subsets selected by the selecting sub-unit 301.

The baseband signal generating unit 30 may use (without limitation) Inverse Fast Fourier Transformation (IFFT) to generate the baseband signal.

The specific implementing principle of each component of the device provided by the disclosure is already described in the above detailed illustration of the principle of the method. Therefore, it will not be described again here.

Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims and their equivalents.

## Claims

1. A signal modulation method based on orthogonal frequency division multiplex, comprising:
determining (S10) a baseband frequency range according to a baseband sampling frequency;
determining (S20) N frequency range subsets within the baseband frequency range, wherein N is a natural number;
selecting (S30) n frequency range subsets from the N determined frequency range subsets, wherein 1 ≤n≤N;
generating a baseband signal whose frequency range is restricted to the n selected frequency range subsets; and
modulating (S40) the baseband signal generated onto a carrier;
wherein the baseband sampling frequency is 7.68 MHz or 30.72 MHz;
wherein when the baseband sampling frequency is 7.68MHz, three of the frequency range subsets whose widths are 1.25MHz, 2.5MHz and 5MHz are determined respectively to support three different transmission bandwidths of 1.25MHz, 2.5MHz and 5MHz on the basis of the baseband sampling frequency of 7.68MHz;
wherein when the baseband sampling frequency is 30.72MHz, three of the frequency range subsets whose widths are 10MHz, 15MHz and 20MHz are determined respectively to support three different transmission bandwidths of 10MHz, 15MHz and 20MHz on the basis of the baseband sampling frequency of 30.72MHz.

2. The method according to claim 1, wherein each of the N determined frequency range subsets corresponds to a transmission bandwidth.

3. The method according to claim 1, wherein in the process of determining the baseband frequency range according to the baseband sampling frequency, a maximum range of the baseband frequency range is determined according to the baseband sampling frequency.

4. The method according to any one of claims 1 to 3, wherein, in the process of determining N frequency range subsets within the baseband frequency range, each determined frequency range subset is non-overlapping.

5. The method according to claims 1 to 4, wherein in the process of determining N frequency range subsets within the baseband frequency range, when determining each to-be-determined frequency range subset, it is guaranteed that a specified frequency range interval is reserved between every two neighboring to-be-determined frequency range subsets.

6. The method according to claims 1 to 5, wherein each to-be-determined frequency range subset is formed by excluding a guard band from a system carrier bandwidth.

7. The method according to claim 1, wherein in the process of selecting n frequency range subsets from the N determined frequency range subsets, and generating the baseband signal whose frequency range is restricted to the n selected frequency range subsets, an Inverse Fast Fourier Transformation is used to generate the baseband signal.

8. The method according to claim 1, wherein in the process of selecting n frequency range subsets from the N determined frequency range subsets, and generating the baseband signal whose frequency range is restricted to the n selected frequency range subsets, the baseband signal whose frequency range is restricted to the n selected frequency range subsets is generated by setting a power of a sub-carrier corresponding to a frequency range outside the n selected frequency range subsets to zero.

9. The method according to claim 1, wherein if N≥2, the process of determining N frequency range subsets within the baseband frequency range further comprises:
selecting m frequency range subsets from the N determined frequency range subsets, wherein 2≤m≤N; and
combining the m selected frequency range subsets into a frequency range subset.

10. The method according to claim 9, wherein in the process of selecting m frequency range subsets from the N determined frequency range subsets, the m selected frequency range subsets are continuous.

11. The method according to claim 10, wherein the frequency range of the combined frequency range subset obtained through combination in the process of combining the m selected frequency range subsets into the frequency range subset comprises:
frequency ranges corresponding to the m selected frequency range subsets respectively; and
frequency range intervals between every two neighboring frequency range subsets in the m selected continuous frequency range subsets.

12. The method according to any one of claims 1 to 5 or of claims 7 to 11, wherein the method is used in:
an Orthogonal Frequency Division Multiplex Access system; or
a Discrete Fourier Transformation Spread Orthogonal Frequency Division Multiplex Access system; or
a Multiplex Carrier Code Division Multiple Access system.

13. A signal modulation device based on orthogonal frequency division multiplex, comprising:
a baseband frequency range determining unit (10), adapted to determine a baseband frequency range according to a baseband sampling frequency;
a frequency range subset determining unit (20), adapted to determine N frequency range subsets within the baseband frequency range, wherein N is a natural number;
a baseband signal generating unit (30), adapted to select n frequency range subsets from the N determined frequency range subsets, and generate a baseband signal whose frequency range is restricted to the n selected frequency range subsets, wherein 1 ≤n≤N; and
a modulating unit (40), adapted to modulate the baseband signal generated onto a carrier;
wherein the baseband sampling frequency is 7.68 MHz or 30.72 MHz;
wherein when the baseband sampling frequency is 7.68MHz, three of the frequency range subsets whose widths are 1.25MHz, 2.5MHz and 5MHz are determined respectively to support three different transmission bandwidths of 1.25MHz, 2.MHz and 5MHz on the basis of the baseband sampling frequency of 7.68MHz;
wherein when the baseband sampling frequency is 30.72MHz, three of the frequency range subsets whose widths are 10MHz, 15MHz and 20MHz are determined respectively to support three different transmission bandwidths of 10MHz, 15MHz and 20MHz on the basis of the baseband sampling frequency of 30.72MHz.

14. The signal modulation device according to claim 13, wherein each of the N determined frequency range subsets corresponds to a transmission bandwidth.

15. The signal modulation device according to claim 13 or 14, further comprises:
a selecting unit (50), adapted to select m frequency range subsets from the N determined frequency range subsets, wherein 2≤m≤N; and
a combining unit (60), adapted to combine the m selected frequency range subsets into a frequency range subset.

16. The signal modulation device according to claim 13 or 14, wherein the baseband signal generating unit specifically comprises:
a selecting sub-unit (301), adapted to select n frequency range subsets from the N determined frequency range subsets;
a zero setting sub-unit (302), adapted to set a power of a sub-carrier corresponding to a frequency range outside the n selected frequency range subsets selected to zero; and
a baseband signal generating sub-unit (303), adapted to generate a baseband signal whose frequency range is restricted to the n selected frequency range subsets.

17. The signal modulation device according to claim 13 or 16, wherein the baseband signal generating unit adopts Inverse Fast Fourier Transformation to generate the baseband signal.

## Patentansprüche

1. Signalmodulationsverfahren auf der Basis von Orthogonal-Frequenzmultiplex, umfassend:
Bestimmen (S10) eines Basisband-Frequenzbereichs gemäß einer Basisband-Abtastfrequenz;
Bestimmen (S20) von N Frequenzbereichsteilmengen in dem Basisband-Frequenzbereich, wobei N eine natürliche Zahl ist;
Auswählen (S30) von n Frequenzbereichsteilmengen aus den N bestimmten Frequenzbereichsteilmengen, wobei 1 ≤n≤N ist;
Erzeugen eines Basisbandsignals, dessen Frequenzbereich auf die n ausgewählten Frequenzbereichsteilmengen beschränkt ist; und
Modulieren (S40) des erzeugten Basisbandsignals auf einen Träger;
wobei die Basisband-Abtastfrequenz 7,68 MHz oder 30,72 MHz ist;
wobei, wenn die Basisband-Abtastfrequenz 7,68 MHz ist, jeweils drei der Frequenzbereichsteilmengen, deren Breiten 1,25 MHz, 2,5 MHz und 5 MHz sind,
bestimmt werden, um drei verschiedene Übertragungsbandbreiten von 1,25 MHz, 2,5 MHz und 5 MHz auf der Basis der Basisband-Abtastfrequenz von 7,68 MHz zu unterstützen; und
wobei, wenn die Basisband-Abtastfrequenz 30,72 MHz ist, jeweils drei der Frequenzbereichsteilmengen, deren Breiten 10 MHz, 15 MHz und 20 MHz sind, bestimmt werden, um drei verschiedene Übertragungsbandbreiten von 10 MHz, 15 MHz und 20 MHz auf der Basis der Basisband-Abtastfrequenz von 30,72 MHz zu unterstützen.

2. Verfahren nach Anspruch 1, wobei jede der N bestimmten Frequenzbereichsteilmengen einer Übertragungsbandbreite entspricht.

3. Verfahren nach Anspruch 1, wobei beim Vorgang des Bestimmens des Basisband-Frequenzbereichs gemäß der Basisband-Abtastfrequenz ein maximaler Bereich des Basisband-Frequenzbereichs gemäß der Basisband-Abtastfrequenz bestimmt wird.

4. Verfahren nach einem der Ansprüche 1 bis 3, wobei beim Vorgang des Bestimmens von N Frequenzbereichsteilmengen in dem Basisband-Frequenzbereich jede bestimmte Frequenzbereichsteilmenge nicht überlappend ist.

5. Verfahren nach Anspruch 1 bis 4, wobei beim Vorgang des Bestimmens von N Frequenzbereichsteilmengen in dem Basisband-Frequenzbereich beim Bestimmen jeder zu bestimmenden Frequenzbereichsteilmenge garantiert ist, dass ein spezifiziertes Frequenzbereichsintervall zwischen jeweils zwei benachbarten zu bestimmenden Frequenzbereichsteilmengen reserviert ist.

6. Verfahren nach Anspruch 1 bis 5, wobei jede zu bestimmende Frequenzbereichsteilmenge durch Ausschließen eines Schutzbands aus einer Systemträgerbandbreite gebildet wird.

7. Verfahren nach Anspruch 1, wobei beim Vorgang des Auswählens von n Frequenzbereichsteilmengen aus den N bestimmten Frequenzbereichsteilmengen und Erzeugens des Basisbandsignals, dessen Frequenzbereich auf die n ausgewählten Frequenzbereichsteilmengen beschränkt ist, eine inverse schnelle Fouriertransformation zum Erzeugen des Basisbandsignals verwendet wird.

8. Verfahren nach Anspruch 1, wobei beim Vorgang des Auswählens von n Frequenzbereichsteilmengen aus den N bestimmten Frequenzbereichsteilmengen und des Erzeugens des Basisbandsignals, dessen Frequenzbereich auf die n ausgewählten Frequenzbereichsteilmengen beschränkt ist, das Basisbandsignal, dessen Frequenzbereich auf die n ausgewählten Frequenzbereichsteilmengen beschränkt ist, durch Setzen einer Leistung eines Subträgers, der einem Frequenzbereich außerhalb der n ausgewählten Frequenzbereichsteilmengen entspricht, auf null erzeugt wird.

9. Verfahren nach Anspruch 1, wobei im Fall N≥2 der Vorgang des Bestimmens von N Frequenzbereichsteilmengen in dem Basisband-Frequenzbereich ferner Folgendes umfasst:
Auswählen von m Frequenzbereichsteilmengen aus den N bestimmten Frequenzbereichsteilmengen, wobei 2≤m≤N ist; und
Kombinieren der m ausgewählten Frequenzbereichsteilmengen zu einer Frequenzbereichsteilmenge.

10. Verfahren nach Anspruch 9, wobei beim Vorgang des Auswählens von m Frequenzbereichsteilmengen aus den N bestimmten Frequenzbereichsteilmengen die m ausgewählten Frequenzbereichsteilmengen kontinuierlich sind.

11. Verfahren nach Anspruch 10, wobei der Frequenzbereich der durch Kombination beim Vorgang des Kombinierens der m ausgewählten Frequenzbereichsteilmengen zu der Frequenzbereichsteilmenge erhaltenen kombinierten Frequenzbereichsteilmenge Folgendes umfasst:
Frequenzbereiche, die jeweils den m ausgewählten Frequenzbereichsteilmengen entsprechen; und
Frequenzbereichsintervalle zwischen jeweils zwei benachbarten Frequenzbereichsteilmengen in den m ausgewählten kontinuierlichen Frequenzbereichsteilmengen.

12. Verfahren nach einem der Ansprüche 1 bis 5 oder 7 bis 11, wobei das Verfahren in Folgendem verwendet wird:
einem Orthogonal-Frequenzmultiplexzugriffssystem; oder
einem Diskret-Fouriertransformation-Spreiz-Orthogonalfrequenzmultiplex-Zugriffs-system; oder
einem Multiplex-Trägercode-Mehrfachzugriffssystem.

13. Signalmodulationsvorrichtung auf der Basis von Orthogonal-Frequenzmultiplex, umfassend:
eine Basisband-Frequenzbereichs-Bestimmungseinheit (10), ausgelegt zum Bestimmen eines Basisband-Frequenzbereichs gemäß einer Basisband-Abtastfrequenz;
eine Frequenzbereichs-Teilmengen-Bestimmungseinheit (20), ausgelegt zum Bestimmen von N Frequenzbereichsteilmengen in dem Basisband-Frequenzbereich,
wobei N eine natürliche Zahl ist;
eine Basisbandsignal-Erzeugungseinheit (30), ausgelegt zum Auswählen von n Frequenzbereichsteilmengen aus den N bestimmten Frequenzbereichsteilmengen,
und zum Erzeugen eines Basisbandsignals, dessen Frequenzbereich auf die n ausgewählten Freqüenzbereichsteilmengen beschränkt ist, wobei 1 ≤n≤N.; und eine Modulationseinheit (40), ausgelegt zum Modulieren des erzeugten Basisbandsignals auf einen Träger;
wobei die Basisband-Abtastfrequenz 7,68 MHz oder 30,72 MHz ist;
wobei, wenn die Basisband-Abtastfrequenz 7,68 MHz ist, jeweils drei der Frequenzbereichsteilmengen, deren Breiten 1,25 MHz, 2,5 MHz und 5 MHz sind,
bestimmt werden, um drei verschiedene Übertragungsbandbreiten von 1,25 MHz, 2,5 MHz und 5 MHz auf der Basis der Basisband-Abtastfrequenz von 7,68 MHz zu unterstützen;
wobei, wenn die Basisband-Abtastfrequenz 30,72 MHz ist, jeweils drei der Frequenzbereichsteilmengen, deren Breiten 10 MHz, 15 MHz und 20 MHz sind, bestimmt werden, um drei verschiedene Übertragungsbandbreiten von 10 MHz, 15 MHz und 20 MHz auf der Basis der Basisband-Abtastfrequenz von 30,72 MHz zu unterstützen.

14. Signalmodulationsvorrichtung nach Anspruch 13, wobei jede der N bestimmten Frequenzbereichsteilmengen einer Übertragungsbandbreite entspricht.

15. Signalmodulationsvorrichtung nach Anspruch 13 oder 14, ferner umfassend:
eine Auswahleinheit (50), ausgelegt zum Auswählen von m Frequenzbereichsteilmengen aus den N bestimmten Frequenzbereichsteilmengen,
wobei 2≤m≤N ist; und
eine Kombiniereinheit (60), ausgelegt zum Kombinieren der m ausgewählten Frequenzbereichsteilmengen zu einer Frequenzbereichsteilmenge.

16. Signalmodulationsvorrichtung nach Anspruch 13 oder 14, wobei die Basisband-Signalerzeugungseinheit spezifisch Folgendes umfasst:
eine Auswahl-Subeinheit (301), ausgelegt zum Auswählen von n Frequenzbereichsteilmengen aus den N bestimmten Frequenzbereichsteilmengen;
eine Nullsetz-Subeinheit (302), ausgelegt zum Setzen einer Leistung eines Subträgers, der einem Frequenzbereich außerhalb der n ausgewählten Frequenzbereichsteilmengen entspricht, auf null; und
eine Basisbandsignal-Erzeugungssubeinheit (303), ausgelegt zum Erzeugen eines Basisbandsignals, dessen Frequenzbereich auf die n ausgewählten Frequenzbereichsteilmengen beschränkt ist.

17. Signalmodulationsvorrichtung nach Anspruch 13 oder 16, wobei die Basisbandsignal-Erzeugungseinheit inverse schnelle Fouriertransformation zum Erzeugen des Basisbandsignals verwendet.

## Revendications

1. Procédé de modulation de signal à base de multiplexage par répartition orthogonale de fréquence, comprenant :
la détermination (S10) d'une gamme de fréquences de bande de base en fonction d'une fréquence d'échantillonnage de bande de base ;
la détermination (S20) de N sous-ensembles de gammes de fréquences au sein de la gamme de fréquences de bande de base, dans lequel N est un entier naturel ;
la sélection (S30) de n sous-ensembles de gammes de fréquences parmi les N sous-ensembles de gammes de fréquences déterminés, dans lequel 1 ≤ n ≤ N ;
la génération d'un signal de bande de base dont la gamme de fréquences est limitée aux n sous-ensembles de gammes de fréquences sélectionnés ; et
la modulation (S40) du signal de bande de base généré sur une porteuse ;
dans lequel la fréquence d'échantillonnage de bande de base est de 7,68 MHz ou de 30,72 MHz ;
dans lequel, lorsque la fréquence d'échantillonnage de bande de base est de 7,68 MHz, trois des sous-ensembles de gammes de fréquences dont les largeurs sont de 1,25 MHz, 2,5 MHz, et 5 MHz sont respectivement déterminés pour prendre en charge trois largeurs de bande de transmission différentes de 1,25 MHz, 2,5 MHz et 5 MHz sur la base de la fréquence d'échantillonnage de bande de base de 7,68 MHz ;
dans lequel, lorsque la fréquence d'échantillonnage de bande de base est de 30,72 MHz, trois des sous-ensembles de gammes de fréquences dont les largeurs sont de 10 MHz, 15 MHz, et 20 MHz sont respectivement déterminés pour prendre en charge trois largeurs de bande de transmission différentes de 10 MHz, 15 MHz et 20 MHz sur la base de la fréquence d'échantillonnage de bande de base de 30,72 MHz.

2. Procédé selon la revendication 1, dans lequel chacun des N sous-ensembles de gammes de fréquences déterminés correspond à une largeur de bande de transmission.

3. Procédé selon la revendication 1, dans lequel, lors du processus de détermination de la gamme de fréquences de bande de base en fonction de la fréquence d'échantillonnage de bande de base, une gamme maximale de la gamme de fréquences de bande de base est déterminée en fonction de la fréquence d'échantillonnage de bande de base.

4. Procédé selon l'une quelconque des revendications 1 à 3, dans lequel, lors du processus de détermination de N sous-ensembles de gammes de fréquences au sein de la gamme de fréquences de bande de base, chaque sous-ensemble de gammes de fréquences déterminé ne présente pas de chevauchement.

5. Procédé selon les revendications 1 à 4, dans lequel, lors du processus de détermination de N sous-ensembles de gammes de fréquences au sein de la gamme de fréquences de bande de base, lors de la détermination de chaque sous-ensemble de gammes de fréquences à déterminer, il est garanti qu'un intervalle de gamme de fréquences spécifié soit réservé tous les deux sous-ensembles de gammes de fréquences à déterminer.

6. Procédé selon les revendications 1 à 5, dans lequel chaque sous-ensemble de gammes de fréquences à déterminer est formé en excluant une bande de garde d'une largeur de bande de porteuse système.

7. Procédé selon la revendication 1, dans lequel, lors du processus de sélection de n sous-ensembles de gammes de fréquences parmi les N sous-ensembles de gammes de fréquences déterminés, et lors de la génération du signal de bande de base dont la gamme de fréquences est limitée aux n sous-ensembles de gammes de fréquences sélectionnés, une transformation de Fourier rapide inverse est utilisée pour générer le signal de bande de base.

8. Procédé selon la revendication 1, dans lequel, lors du processus de sélection de n sous-ensembles de gammes de fréquences parmi les N sous-ensembles de gammes de fréquences déterminés, et lors de la génération du signal de bande de base dont la gamme de fréquences est limitée aux n sous-ensembles de gammes de fréquences sélectionnés, le signal de bande de base dont la gamme de fréquences est limitée aux n sous-ensembles de gammes de fréquences sélectionnés est généré en mettant à zéro une puissance d'une sous-porteuse correspondant à une gamme de fréquences extérieure aux n sous-ensembles de fréquences sélectionnés.

9. Procédé selon la revendication 1, dans lequel, si N ≤ 2, le processus de détermination de N sous-ensembles de gammes de fréquences au sein de la gamme de fréquences de bande de base comprend en outre :
la sélection de m sous-ensembles de gammes de fréquences parmi les N sous-ensembles de gammes de fréquences déterminés, dans lequel 2 ≤ m ≤ M ; et
la combinaison des m sous-ensembles de gammes de fréquences sélectionnés en un sous-ensemble de gammes de fréquences.

10. Procédé selon la revendication 9, dans lequel, lors du processus de sélection de m sous-ensembles de gammes de fréquences parmi les N sous-ensembles de gammes de fréquences déterminés, les m sous-ensembles de gammes de fréquences sélectionnés sont continus.

11. Procédé selon la revendication 10, dans lequel la gamme de fréquences du sous-ensemble de gammes de fréquences combiné obtenu par combinaison lors du processus de combinaison des m sous-ensembles de gammes de fréquences sélectionnés en le sous-ensemble de gammes de fréquences comprend :
des gammes de fréquences correspondant respectivement aux m sous-ensembles de gammes de fréquences sélectionnés ; et
des intervalles de gammes de fréquences tous les deux sous-ensembles de gammes de fréquences voisins dans les m sous-ensembles de gammes de fréquences continus sélectionnés.

12. Procédé selon l'une quelconque des revendications 1 à 5 ou des revendications 7 à 11, dans lequel le procédé est utilisé dans :
un système d'accès à multiplexage par répartition orthogonale de fréquence ; ou
un système d'accès à multiplexage par répartition orthogonale de fréquence étalé par transformation de Fourier discrète ; ou
un système d'accès multiple par répartition de code de porteuses multiplexées.

13. Dispositif de modulation de signal à base de multiplexage par répartition orthogonale de fréquence, comprenant :
une unité de détermination de gamme de fréquences de bande de base (10), apte à déterminer une gamme de fréquences de bande de base en fonction d'une fréquence d'échantillonnage de bande de base ;
une unité de détermination de sous-ensembles de gammes de fréquences (20), apte à déterminer N sous-ensembles de gammes de fréquences au sein de la gamme de fréquences de bande de base, dans lequel N est un entier naturel ;
une unité génératrice de signal de bande de base (30), apte à sélectionner n sous-ensembles de gammes de fréquences parmi les N sous-ensembles de gammes de fréquences déterminés, et à générer un signal de bande de base dont la gamme de fréquences est limitée aux n sous-ensembles de gammes de fréquences sélectionnés,
dans lequel 1 ≤ n ≤ N ; et
une unité de modulation (40), apte à moduler le signal de bande de base généré sur une porteuse ;
dans lequel la fréquence d'échantillonnage de bande de base est de 7,68 MHz ou de 30,72 MHz ;
dans lequel, lorsque la fréquence d'échantillonnage de bande de base est de 7,68 MHz, trois des sous-ensembles de gammes de fréquences dont les largeurs sont de 1,25 MHz, 2,5 MHz, et 5 MHz sont respectivement déterminés pour prendre en charge trois largeurs de bande de transmission différentes de 1,25 MHz, 2,5 MHz et 5 MHz sur la base de la fréquence d'échantillonnage de bande de base de 7,68 MHz ;
dans lequel, lorsque la fréquence d'échantillonnage de bande de base est de 30,72 MHz, trois des sous-ensembles de gammes de fréquences dont les largeurs sont de 10 MHz, 15 MHz, et 20 MHz sont respectivement déterminés pour prendre en charge trois largeurs de bande de transmission différentes de 10 MHz, 15 MHz et 20 MHz sur la base de la fréquence d'échantillonnage de bande de base de 30,72 MHz.

14. Dispositif de modulation de signal selon la revendication 13, dans lequel chacun des N sous-ensembles de gammes de fréquences déterminés correspond à une largeur de bande de transmission.

15. Dispositif de modulation de signal selon la revendication 13 ou 14, comprenant en outre :
une unité de sélection (50), apte à sélectionner m sous-ensembles de gammes de fréquences parmi les N sous-ensembles de gammes de fréquences déterminés, dans lequel 2 ≤ m ≤ N ; et
une unité de combinaison (60), apte à combiner les m sous-ensembles de gammes de fréquences sélectionnés en un sous-ensemble de gammes de fréquences.

16. Dispositif de modulation de signal selon la revendication 13 ou 14, dans lequel l'unité génératrice de signal de bande de base comprend plus précisément :
une sous-unité de sélection (301), apte à sélectionner n sous-ensembles de gammes de fréquences parmi les N sous-ensembles de gammes de fréquences déterminés ;
une sous-unité de mise à zéro (302), apte à mettre à zéro une puissance d'une sous-porteuse correspondant à une gamme de fréquences extérieure aux n sous-ensembles de gammes de fréquences sélectionnés ; et
une sous-unité génératrice de signal de bande base (303), apte à générer un signal de bande de base dont la gamme de fréquences est limitée aux n sous-ensemble de gammes de fréquences sélectionnés.

17. Dispositif de modulation de signal selon la revendication 13 ou 16, dans lequel l'unité génératrice de signal de bande de base utilise une transformation de Fourier rapide inverse pour générer le signal de bande de base.
